# EUROPEAN PATENT APPLICATION

(11) **EP 3 506 537 A2**
(43) Date of publication of application: **03.07.2019**
(21) Application number: 18211511.3
(22) Date of filing: 11.12.2018
(51) Int. Cl.: H04K 1/02

(54) **SUPPLEMENTARY APPARATUS AND METHOD FOR CDMA ENCAPSULATION**

(30) Priority: 28.12.2017 IL 256640
(71) Applicant: Elta Systems Ltd., 7710201 Ashdod (IL)
(72) Inventor: ELMAKIAS, Michael, 7763010 Ashdod (IL); TSAMERET, Avraham, 7621904 Rehovot (IL)
(74) Representative: HGF Limited

(57) **Abstract**

A method to disguise existence of a communication channel and/or type of communication method thereby to provide a discrete communication channel and/or protect communicated contents from malevolent manipulations, the method comprising: at a transmitter end, transforming a signal to be transmitted into a noise-like signal without changing the original communication parameters and protocol, and transmitting the noise-like signal; and/or at a receiver end, receiving a noise-like signal and de-spreading the noise-like signal thereby to reconstruct the signal to be transmitted.

## Description

### FIELD OF THE INVENTION

The present invention relates generally to wireless communication networks.

### BACKGROUND OF THE INVENTION

United States Patent No. US4052565 describes a conventional Walsh function signal scrambler.

Japanese patent document no. JPS57162549 (A) describes a conventional analog privacy telephone set.

United States Patent No. US4188580 describes a conventional secure communication system.

United States Patent No. US5301235 describes a conventional arrangement for transforming plaintext into ciphertext for use in a data communications system.

United States Patent No. US4434322 describes a conventional coded data transmission system.

United States Patent No. US4573205 describes a conventional technique for secure communications on FM radio channels.

United States Patent No. US7460667 describes conventional digital hidden data transport (DHDT).

The disclosures of all publications and patent documents mentioned in the specification, and of the publications and patent documents cited therein directly or indirectly, and of specifications of mentioned protocols are hereby incorporated by reference.

### SUMMARY OF THE INVENTION

Certain embodiments seek to use CDMA encapsulation to cope with interference and/or to disguise communication.

### BRIEF DESCRIPTION OF THE DRAWINGS

Certain embodiments of the present invention are illustrated in the following drawings:

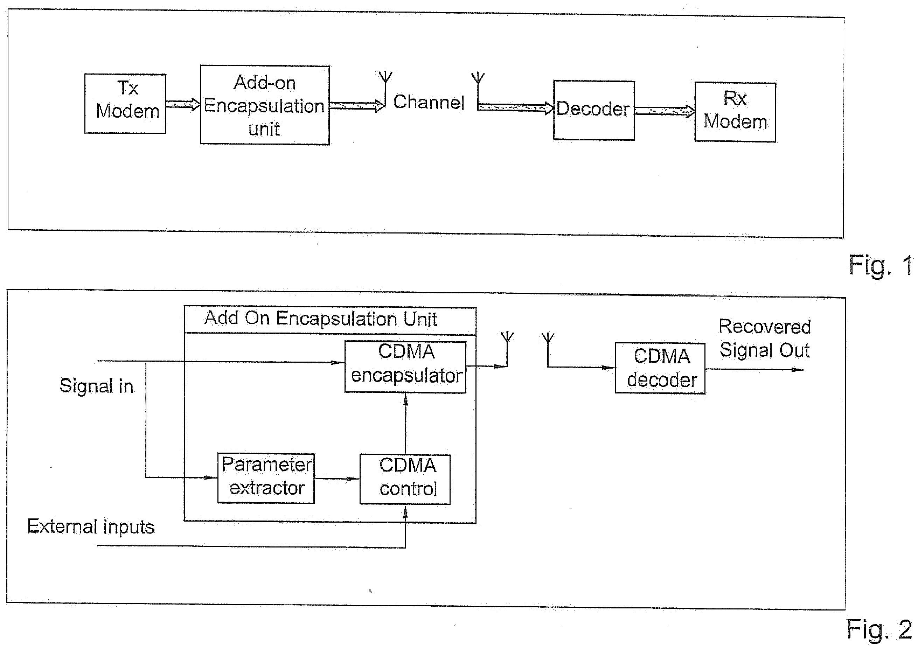

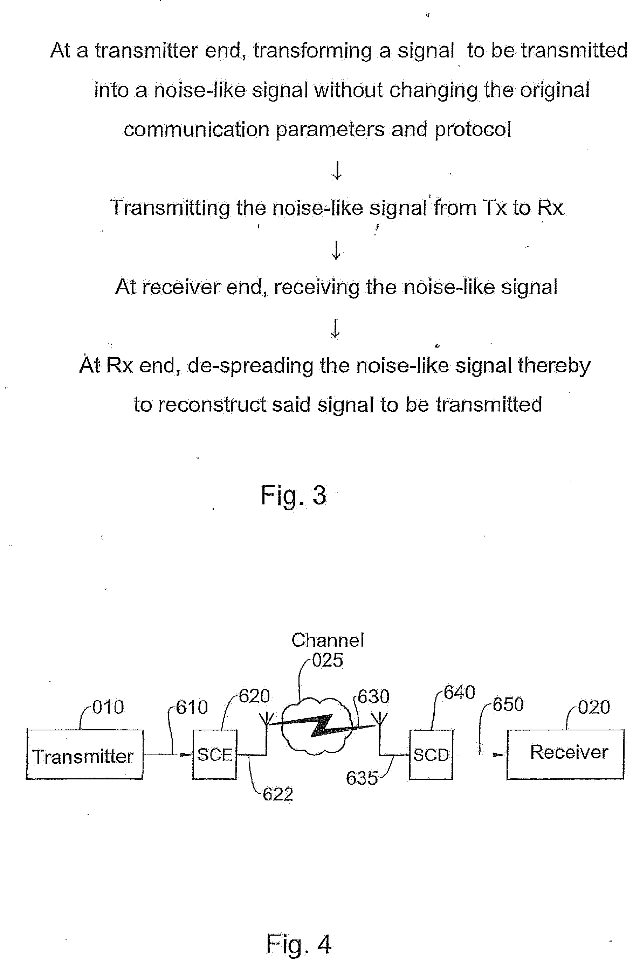

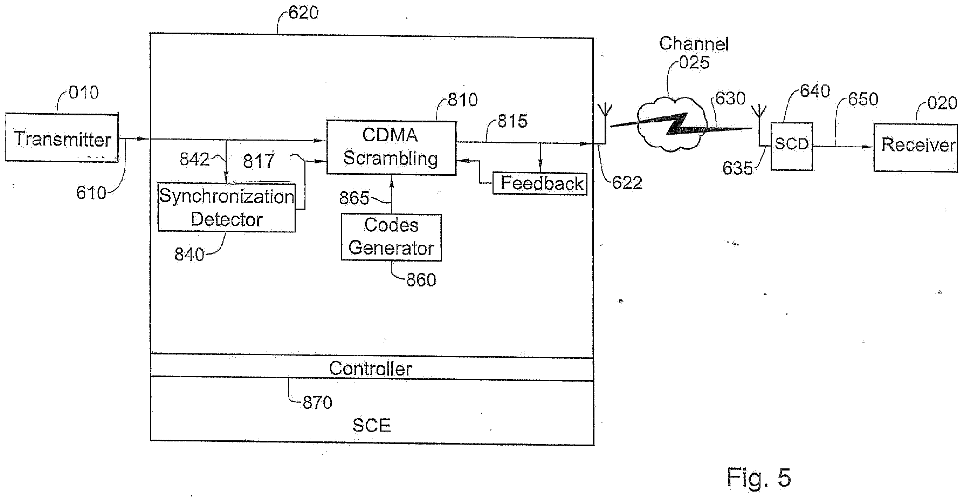

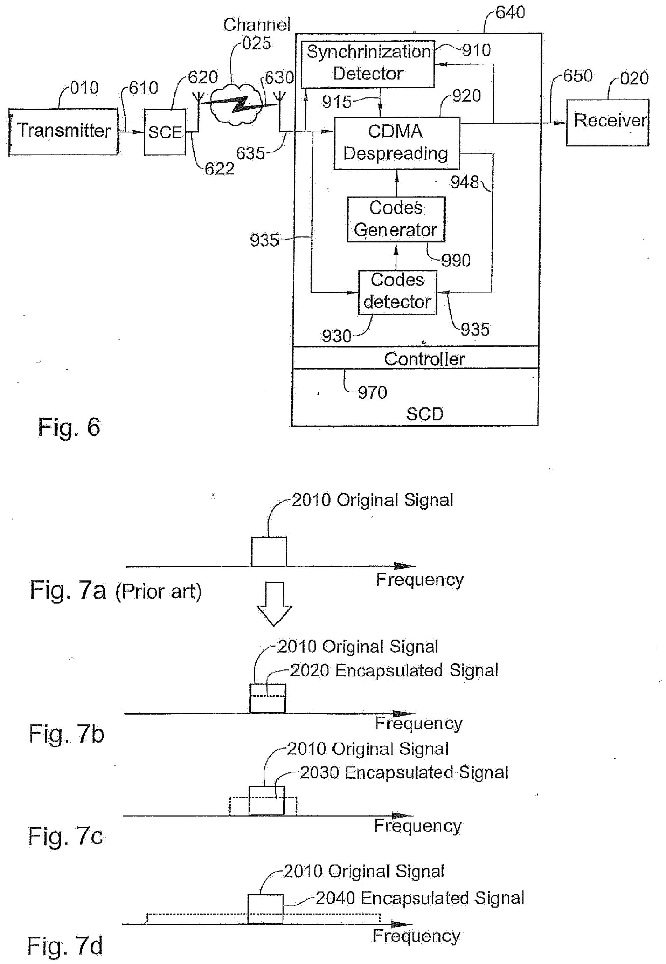

Figs. 1 - 6, 7a - 7d all illustrate or aid in understanding certain embodiments of the present invention. It is appreciated that the mobile stations may for example communicate in accordance with IEEE 802.11 standards. Mobile stations may operate in accordance with 802.11 physical (PHY) layer and medium access control (MAC) layer conventions e.g. as specified in ANSI/IEEE Standard 802.11 and Part 11: Wireless LAN Medium Access Control (MAC) and Physical Layer (PHY) Specifications, all of which is hereby incorporated by reference. Alternatively, any other types of WLANs are applicable, as are any suitable packet-based wireless communication use-cases. Functional elements shown herein may be implemented in custom or semi-custom integrated circuit/s and/or in software on a suitable microprocessor and/or in software on a suitable digital signal processor (DSP) device, and/or in hard-wired logic e.g. using suitable conventional discrete circuit components. Division into specific functional blocks herein is made for simplicity, however, depending on use-case specific implementation considerations, any operations and functionalities of plural blocks may be combined into a single block or alternatively operations and functionalities of a single block may be performed by sub-blocks.

Computational components described and illustrated herein can be implemented in various forms, for example, as hardware circuits such as but not limited to custom VLSI circuits or gate arrays or programmable hardware devices such as but not limited to FPGAs, or as software program code stored on at least one intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences such as but not limited to objects, procedures, functions, routines and programs and may originate from several computer files which typically operate synergistically.

Data can be stored on one or more intangible computer readable media stored at one or more different locations, different network nodes or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include an apparatus which is primary, secondary, tertiary or off-line, which is of any type or level or amount or category of volatility, differentiation, mutability, accessibility, addressability, capacity, performance and energy use, and which is based on any suitable technologies such as semiconductor, magnetic, optical, paper and others.

### DETAILED DESCRIPTION OF CERTAIN EMBODIMENTS

Reference is now made to Figs. 1 - 3; it is appreciated that the add-on Tx-end unit in Fig. 1 may perform the Tx-end spreading described herein, whereas the decode of Fig. 1 may perform the Rx-end de-spreading described herein. It is appreciated that communication network systems are widely deployed to provide various communication services. In certain cases it is desired to disguise the existence of the communication channel and/or the type of the communication method in order to provide a discrete communication channel and to protect the communicated contents from malevolent manipulations. The CDMA signal is an example of a noise-like signal and is, according to certain embodiments, used for communication concealment. According to certain embodiments, at least one transmitted signal is transformed to a CDMA signal without changing the original communication parameters and protocol. This operation may be applied to any communication method, digital or analog, even without prior knowledge of signal parameters such as frequency and modulation scheme, and even without prior knowledge of the communication protocol. According to certain embodiments, the communication is encapsulated in a CDMA framework without changing either the original communication parameters or the protocol. Typically, an add-on unit transforms a signal to be transmitted to a noise-like signal using a pseudo-random sequence (PRS). This spreads the signal and facilitates resistance to illegitimate manipulations. The spreader's operation is controlled by the CDMA controller, which optionally obtains information on the signal from a parameter extractor module and/or from external inputs (e.g. as shown in Figs. 1, 2). Then, an add-on unit on the receiving end of the system may be provided to perform a de-spreading operation (e.g. the reverse of the spreading operation performed at the Tx end) in order to reconstruct the original signal. The spreading factor may, optionally, be adjusted to obtain a particular (typically use-case specific) desired bandwidth. A particular advantage of certain embodiments is that the communication on an existing channel is disguised and this may be done ex post facto, e.g. without cooperation by the channel itself, without knowledge regarding either the signal or of the communication method/protocol being used to transmit it, and without substantially altering the signal itself which may be concealed by Tx-end spreading described above, then reconstructed by Rx-end de-spreading as described above. In the next generation of cellular communications (LTE Advanced), cell density is increasing. Additionally, there is interference both within and outside of the network, which can impede the cell's ability to provide communication services. According to certain embodiments, an encapsulation block is added which is operative for performing encapsulation using the CDMA method, where the block comprises add-on equipment retro-fitted to interface with a legacy (already existing and deployed and/or off-the-shelf) LTE base station and LTE end unit or modem. Conventional CDMA technique may then be implemented on the final waveform itself, thereby to facilitate coping with interference, facilitating an increased number of channels per frequency slice or segment and improving coping with communication channels that the original signal was not designed for. Any of various different methods for integrating encapsulation capability may be employed, none of which significantly harm the conventional communication that is desired to be conveyed or cellularly transmitted.

Technological advantageous features provided in certain embodiments may include some or all of the following:
- Deny access to unauthorized users
- Reduce mutual interference between nodes in the network
- Increasing reuse of frequencies, relative to prior art systems which lack the add-on CDMA shown and described herein.
- Coping with interference which is external to the network
- Improved coping with high speeds
- Improved coping with multi-reflected channels
- Added ability to measure the range between the end units and the base station, typically more accurately than in conventional systems which lack the add-on CDMA shown and described herein.
- Freedom to choose any base station and modem from any manufacturer
- No need to develop a fully-fledged dedicated system in all its and its components' complexity, and instead may take advantage of conventional signals.

For example:
Fig. 4 is a simplified block diagram illustration of a Supplementary (add-on) CDMA Encapsulator / Decapsulator (SCE / SCD) for coping with LTE base station interference using frequency shifts, according to certain embodiments.
Fig. 5 is a simplified block diagram illustration of the SCE module 620 of Fig. 4, according to certain embodiments.
Fig. 6 is a simplified block diagram illustration of the SCD module 640 of Fig. 4, according to certain embodiments.
Fig. 7a shows a prior art mode of operation whereas Figs. 7b - 7d show methods of operation provided in accordance with certain embodiments.

According to certain embodiments, functionality described herein is implemented in software and may be deployed remotely, as a software update to already deployed cellphones.

It is appreciated that any reference herein to, or recitation of, an operation being performed, e.g. if the operation is performed at least partly in software, is intended to include both an embodiment where the operation is performed in its entirety by a server A, and also to include any type of "outsourcing" or "cloud" embodiments in which the operation, or portions thereof, is or are performed by a remote processor P (or several such), which may be deployed off-shore or "on a cloud", and an output of the operation is then communicated to, e.g. over a suitable computer network, and used by, server A. Analogously, the remote processor P may not, itself, perform all of the operations and instead, the remote processor P itself may receive output/s of portion/s of the operation from yet another processor/s P', may be deployed off-shore relative to P, or "on a cloud", and so forth.

It is appreciated that terminology such as "mandatory", "required", "need" and "must" refer to implementation choices made within the context of a particular implementation or application described herewithin for clarity and are not intended to be limiting since in an alternative implementation, the same elements might be defined as not mandatory and not required or might even be eliminated altogether.

It is appreciated that software components of the present invention including programs and data may, if desired, be implemented in ROM (read only memory) form including CD-ROMs, EPROMs and EEPROMs, or may be stored in any other suitable typically non-transitory computer-readable medium such as but not limited to disks of various kinds, cards of various kinds and RAMs. Components described herein as software may, alternatively, be implemented wholly or partly in hardware, if desired, using conventional techniques. Conversely, components described herein as hardware may, alternatively, be implemented wholly or partly in software, if desired, using conventional techniques.

Included in the scope of the present invention, inter alia, are electromagnetic signals carrying computer-readable instructions for performing any or all of the steps of any of the methods shown and described herein, in any suitable order; machine-readable instructions for performing any or all of the steps of any of the methods shown and described herein, in any suitable order; program storage devices readable by machine, tangibly embodying a program of instructions executable by the machine to perform any or all of the steps of any of the methods shown and described herein, in any suitable order; a computer program product comprising a computer useable medium having computer readable program code, such as executable code, having embodied therein, and/or including computer readable program code for performing, any or all of the steps of any of the methods shown and described herein, in any suitable order; any technical effects brought about by any or all of the steps of any of the methods shown and described herein, when performed in any suitable order; any suitable apparatus or device or combination of such, programmed to perform, alone or in combination, any or all of the steps of any of the methods shown and described herein, in any suitable order; electronic devices each including a processor and a cooperating input device and/or output device and operative to perform in software any steps shown and described herein; information storage devices or physical records, such as disks or hard drives, causing a computer or other device to be configured so as to carry out any or all of the steps of any of the methods shown and described herein, in any suitable order; a program pre-stored e.g. in memory or on an information network such as the Internet, before or after being downloaded, which embodies any or all of the steps of any of the methods shown and described herein, in any suitable order, and the method of uploading or downloading such, and a system including server/s and/or client/s for using such; and hardware which performs any or all of the steps of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any step described herein may be computer-implemented. The invention shown and described herein may include (a) using a computerized method to identify a solution to any of the problems or for any of the objectives described herein, the solution may include at least one of a decision, an action, a product, a service or any other information described herein that impacts, in a positive manner, a problem or objectives described herein; and (b) outputting the solution.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Features of the present invention which are described in the context of separate embodiments may also be provided in combination in a single embodiment.

For example, a system embodiment is intended to include a corresponding process embodiment. Also, each system embodiment is intended to include a server-centered "view" or client centered "view", or "view" from any other node of the system, of the entire functionality of the system , computer-readable medium, apparatus, including only those functionalities performed at that server or client or node.

Conversely, features of the invention, including method steps, which are described for brevity in the context of a single embodiment or in a certain order, may be provided separately or in any suitable sub-combination or in a different order. "e.g." is used herein in the sense of a specific example which is not intended to be limiting. Devices, apparatus or systems shown coupled in any of the drawings may in fact be integrated into a single platform in certain embodiments or may be coupled via any appropriate wired or wireless coupling such as but not limited to optical fiber, Ethernet, Wireless LAN, HomePNA, power line communication, cell phone, PDA, Blackberry GPRS, Satellite including GPS, or other mobile delivery. It is appreciated that in the description and drawings shown and described herein, functionalities described or illustrated as systems and sub-units thereof can also be provided as methods and steps therewithin, and functionalities described or illustrated as methods and steps therewithin can also be provided as systems and sub-units thereof. The scale used to illustrate various elements in the drawings is merely exemplary and/or appropriate for clarity of presentation and is not intended to be limiting.

## Claims

1. Encapsulation module apparatus added retroactively to an off-the-shelf base station and modem/end unit, the encapsulation block being operative for performing CDMA encapsulation on the final waveform at the output of the modem.

2. Apparatus according to claim 1 wherein the module comprises add-on equipment retro-fitted to interface with an LTE base station and LTE end unit.

3. A method comprising:
multiplication of signals;
determining relative velocity between transmitter and cellular mobile phone; and
correcting or rectifying the signal according to said relative velocity.

4. A method according to claim 3 wherein the method is operative in conjunction with an encapsulation module added retroactively to an off-the-shelf base station and modem/end unit, the encapsulation block being operative for performing CDMA encapsulation on the final waveform at the output of the modem.

5. A method to disguise the existence of the communication channel and/or the type of the communication method thereby to provide a discrete communication channel and/or protect the communicated contents from malevolent manipulations, the method comprising:
at a transmitter end, transforming a signal to be transmitted into a noise-like signal without changing the original communication parameters and protocol, and transmitting the noise-like signal; and/or
at a receiver end, receiving a noise-like signal and de-spreading the noise-like signal thereby to reconstruct said signal to be transmitted.

6. A method according to claim 5 wherein the communication is encapsulated in a CDMA framework without changing either the original communication parameters or the protocol.

7. A method according to claim 5 or 6 wherein said transforming is performed by an add-on unit at the Tx end which is retroactively added without awareness of or cooperation from the transmitter.

8. A method according to claim 5 or 6 or 7 wherein the signal to be transmitted is transformed to a noise-like signal using a pseudo-random sequence (PRS) thereby to spread the signal thereby to enhance resistance to malevolent manipulations.

9. A method according to claim 5 or 6 or 7 or 8 wherein said spreading is controlled by a CDMA controller, which obtains information about the signal from at least one of a parameter extractor module and an external input.

10. A method according to claim 5, 6, 7, 8 or 9 wherein said de-spreading operation is the inverse of a spreading operation performed at the transmitter end in order to reconstruct the original signal.

11. A method according to claim 5, 6, 7, 8, 9 or 10 wherein the spreading factor is selected to ensure a particular desired bandwidth.

12. A method according to any of claims 5 - 11 wherein said noise-like signal comprises CDMA.
